# EUROPEAN PATENT APPLICATION

(11) **EP 4 711 974 A1**
(43) Date of publication of application: **18.03.2026**
(21) Application number: 25186987.1
(22) Date of filing: 02.07.2025
(51) Int. Cl.: G06K 7/10, H04B 5/77, H04B 5/26

(54) **SYSTEMS AND METHODS FOR LOCATING TAG POSITIONS USING A SINGLE-CHIP**

(30) Priority: 31.07.2024 US 202418790046
(71) Applicant: STMicroelectronics International N.V., 1228 Plan-les-Ouates, Geneva (CH)
(72) Inventor: TIAN, Dongyang, SUZHOU, 215129 (CN); ZHANG, Rui, SHANGHAI, 200241 (CN)
(74) Representative: Cabinet Beaumont

(57) **Abstract**

Apparatuses, systems, and methods for locating tag positions using a single-chip are provided. An exemplary method includes enabling a first antenna of a near-field communication (NFC) reader and disabling a second antenna of the NFC reader; obtaining a first signal via the first antenna based at least in part on enabling the first antenna and disabling the second antenna; after obtaining the first signal, enabling the second antenna and disabling the first antenna; obtaining a second signal via the second antenna based at least in part on enabling the second antenna and disabling the first antenna; and determining a respective location of a first NFC device and a second NFC device based at least in part on the first signal being indicative of a first identifier associated with the first NFC device and the second signal being indicative of a second identifier associated with the second NFC device.

## Description

### TECHNOLOGICAL FIELD

Example embodiments of the present disclosure relate generally to systems and methods for locating tag positions using a single-chip.

### BACKGROUND

Near-field communication (NFC) is a wireless technology that enables devices to connect when brought within a threshold distance of each other. For instance, an NFC reader may communicate with a tag, such as a radio frequency identification (RFID) tag, when located within a threshold distance of the tag. The tag may use modulation, such as passive load modulation or active load modulation, to transmit data to the NFC reader. The NFC reader may use an antenna to detect the modulation and then decode the data.

NFC technology can be used for locating tags. New systems and methods for locating tag positions are needed. The inventors have identified numerous areas of improvement in the existing technologies and processes, which are the subjects of embodiments described herein. Through applied effort, ingenuity, and innovation, many of these deficiencies, challenges, and problems have been solved by developing solutions that are included in embodiments of the present disclosure, some examples of which are described in detail herein.

### BRIEF SUMMARY

Various embodiments described herein relate to systems and methods for locating tag positions using a single-chip.

In accordance with some embodiments of the present disclosure, an example method is provided. The example method comprises:
enabling a first single-ended antenna of a near-field communication (NFC) reader and disabling a second single-ended antenna of the NFC reader, wherein enabling the first single-ended antenna includes connecting the first single-ended antenna to a first ground terminal, and wherein disabling the second single-ended antenna includes disconnecting the second single-ended antenna from a second ground terminal;
obtaining a first signal via the first single-ended antenna based at least in part on enabling the first single-ended antenna and disabling the second single-ended antenna, wherein the first signal is indicative of at least a first identifier associated with a first NFC device;
after obtaining the first signal, enabling the second single-ended antenna and disabling the first single-ended antenna, wherein enabling the second single-ended antenna includes connecting the second single-ended antenna to the second ground terminal, and wherein disabling the first single-ended antenna includes disconnecting the first single-ended antenna from the first ground terminal;
obtaining a second signal via the second single-ended antenna based at least in part on enabling the second single-ended antenna and disabling the first single-ended antenna, wherein the second signal is indicative of at least a second identifier associated with a second NFC device; and
determining a respective location of the first NFC device and the second NFC device based at least in part on the first signal being indicative of the first identifier and the second signal being indicative of the second identifier.

In some embodiments, the first signal and the second signal are further indicative of a third identifier associated with a third NFC device, and the method further comprises determining a location of the third NFC device based at least in part on the first signal and the second signal being indicative of the third identifier.

In some embodiments, determining the location of the third NFC device is based at least in part on at least a first portion of the first single-ended antenna overlapping with at least a second portion of the second single-ended antenna.

In some embodiments, the first single-ended antenna is non-overlapping with the second single-ended antenna.

In some embodiments, enabling the first single-ended antenna and disabling the second single-ended antenna comprises operating a first switch associated with the first single-ended antenna in accordance with an on state to connect the first single-ended antenna to the first ground terminal; and operating a second switch associated with the second single-ended antenna in accordance with an off state to disconnect the second single-ended antenna from the second ground terminal.

In some embodiments, the first switch and the second switch comprise metal-oxide-semiconductor field-effect transistors external to the NFC reader.

In some embodiments, operating the first switch in accordance with the on state includes setting a first antenna tuning voltage associated with the first switch to a first value, and operating the second switch in accordance with the off state includes setting a second antenna tuning voltage associated with the second switch to a second value.

In some embodiments, the first switch and the second switch comprise metal-oxide-semiconductor field-effect transistors internal to the NFC reader.

In some embodiments, operating the first switch in accordance with the on state includes setting a first antenna calibration parameter associated with the first switch to a first value, and operating the second switch in accordance with the off state includes setting a second antenna calibration parameter associated with the second switch to a second value.

In accordance with some other embodiments of the present disclosure, an example computer program product is provided. The example computer program product comprises at least one non-transitory computer-readable storage medium having computer program code stored thereon that, in execution with at least one processor, is configured for:
enabling a first single-ended antenna of a near-field communication (NFC) reader and disabling a second single-ended antenna of the NFC reader, wherein enabling the first single-ended antenna includes connecting the first single-ended antenna to a first ground terminal, and wherein disabling the second single-ended antenna includes disconnecting the second single-ended antenna from a second ground terminal;
obtaining a first signal via the first single-ended antenna based at least in part on enabling the first single-ended antenna and disabling the second single-ended antenna, wherein the first signal is indicative of at least a first identifier associated with a first NFC device;
after obtaining the first signal, enabling the second single-ended antenna and disabling the first single-ended antenna, wherein enabling the second single-ended antenna includes connecting the second single-ended antenna to the second ground terminal, and wherein disabling the first single-ended antenna includes disconnecting the first single-ended antenna from the first ground terminal;
obtaining a second signal via the second single-ended antenna based at least in part on enabling the second single-ended antenna and disabling the first single-ended antenna, wherein the second signal is indicative of at least a second identifier associated with a second NFC device; and
determining a respective location of the first NFC device and the second NFC device based at least in part on the first signal being indicative of the first identifier and the second signal being indicative of the second identifier.

In some embodiments, the first signal and the second signal are further indicative of a third identifier associated with a third NFC device, and the computer program code, in execution with the at least one processor, is further configured for determining a location of the third NFC device based at least in part on the first signal and the second signal being indicative of the third identifier.

In some embodiments, to enable the first single-ended antenna and disable the second single-ended antenna, the computer program code, in execution with the at least one processor, is further configured for operating a first switch associated with the first single-ended antenna in accordance with an on state to connect the first single-ended antenna to the first ground terminal; and operating a second switch associated with the second single-ended antenna in accordance with an off state to disconnect the second single-ended antenna from the second ground terminal.

In some embodiments, the first switch and the second switch comprise metal-oxide-semiconductor field-effect transistors external to the NFC reader.

In some embodiments, operating the first switch in accordance with the on state includes setting a first antenna tuning voltage associated with the first switch to a first value, and operating the second switch in accordance with the off state includes setting a second antenna tuning voltage associated with the second switch to a second value.

In some embodiments, the first switch and the second switch comprise metal-oxide-semiconductor field-effect transistors internal to the NFC reader.

In some embodiments, operating the first switch in accordance with the on state includes setting a first antenna calibration parameter associated with the first switch to a first value, and operating the second switch in accordance with the off state includes setting a second antenna calibration parameter associated with the second switch to a second value.

In accordance with some other embodiments of the present disclosure, an example apparatus is provided. The example system comprises at least one processor; and at least one memory having computer program code stored thereon that, in execution with the at least one processor, causes the apparatus at least to:
enable a first single-ended antenna of a near-field communication (NFC) reader and disable a second single-ended antenna of the NFC reader, wherein enabling the first single-ended antenna includes connecting the first single-ended antenna to a first ground terminal, and wherein disabling the second single-ended antenna includes disconnecting the second single-ended antenna from a second ground terminal;
obtain a first signal via the first single-ended antenna based at least in part on enabling the first single-ended antenna and disabling the second single-ended antenna, wherein the first signal is indicative of at least a first identifier associated with a first NFC device;
after obtaining the first signal, enable the second single-ended antenna and disable the first single-ended antenna, wherein enabling the second single-ended antenna includes connecting the second single-ended antenna to the second ground terminal, and wherein disabling the first single-ended antenna includes disconnecting the first single-ended antenna from the first ground terminal;
obtain a second signal via the second single-ended antenna based at least in part on enabling the second single-ended antenna and disabling the first single-ended antenna, wherein the second signal is indicative of at least a second identifier associated with a second NFC device; and
determine a respective location of the first NFC device and the second NFC device based at least in part on the first signal being indicative of the first identifier and the second signal being indicative of the second identifier.

In some embodiments, the first signal and the second signal are further indicative of a third identifier associated with a third NFC device, and wherein the computer program code, in execution with the at least one processor, causes the apparatus to determine a location of the third NFC device based at least in part on the first signal and the second signal being indicative of the third identifier.

In some embodiments, determining the location of the third NFC device is based at least in part on at least a first portion of the first single-ended antenna overlapping with at least a second portion of the second single-ended antenna.

In some embodiments, to enable the first single-ended antenna and disable the second single-ended antenna, the computer program code, in execution with the at least one processor, causes the apparatus to operate a first switch associated with the first single-ended antenna in accordance with an on state to connect the first single-ended antenna to the first ground terminal; and operate a second switch associated with the second single-ended antenna in accordance with an off state to disconnect the second single-ended antenna from the second ground terminal.

The above summary is provided merely for purposes of summarizing some example embodiments to provide a basic understanding of some aspects of the disclosure. Accordingly, it will be appreciated that the above-described embodiments are merely examples and should not be construed to narrow the scope or spirit of the disclosure in any way. It will also be appreciated that the scope of the disclosure encompasses many potential embodiments in addition to those here summarized, some of which will be further described below.

### BRIEF SUMMARY OF THE DRAWINGS

Having thus described some example embodiments of the present disclosure in general terms, reference will now be made to the accompanying drawings, which are not necessarily drawn to scale, and wherein:
FIGs. 1A and 1B illustrate exemplary antenna configurations for locating tag positions using a single-chip in accordance with at least one embodiment of the present disclosure;
FIG. 2 illustrates an exemplary diagram of a system configured for locating tag positions using a single-chip in accordance with at least one embodiment of the present disclosure;
FIG. 3 illustrates an exemplary diagram of a system configured for locating tag positions using a single-chip in accordance with at least one embodiment of the present disclosure;
FIG. 4 illustrates an exemplary block diagram of operations that support systems and methods for locating tag positions using a single-chip in accordance with at least one embodiment of the present disclosure;
FIG. 5 illustrates an exemplary flowchart of operations that support systems and methods for locating tag positions using a single-chip in accordance with at least one embodiment of the present disclosure; and
FIG. 6 illustrates an exemplary device that support systems and methods for locating tag positions using a single-chip in accordance with at least one embodiment of the present disclosure.

### DETAILED DESCRIPTION

Some embodiments of the present disclosure will now be described more fully herein with reference to the accompanying drawings, in which some, but not all, embodiments of the disclosure are shown. Indeed, various embodiments of the disclosure may be embodied in many different forms and should not be construed as limited to the embodiments set forth herein; rather, these embodiments are provided so that this disclosure will satisfy applicable legal requirements. Like reference numerals refer to like elements throughout.

As used herein, the term "comprising" means including but not limited to and should be interpreted in the manner it is typically used in the patent context. Use of broader terms such as comprises, includes, and having should be understood to provide support for narrower terms such as consisting of, consisting essentially of, and comprised substantially of.

The phrases "in various embodiments," "in one embodiment," "according to one embodiment," "in some embodiments," and the like generally mean that the particular feature, structure, or characteristic following the phrase may be included in at least one embodiment of the present disclosure and may be included in more than one embodiment of the present disclosure (importantly, such phrases do not necessarily refer to the same embodiment).

The word "example" or "exemplary" is used herein to mean "serving as an example, instance, or illustration." Any implementation described herein as "exemplary" is not necessarily to be construed as preferred or advantageous over other implementations.

If the specification states a component or feature "may," "can," "could," "should," "would, " "preferably," "possibly," "typically," "optionally," "for example," "often," or "might" (or other such language) be included or have a characteristic, that a specific component or feature is not required to be included or to have the characteristic. Such a component or feature may be optionally included in some embodiments or it may be excluded.

The use of the term "circuitry" as used herein with respect to components of a system or an apparatus should be understood to include particular hardware configured to perform the functions associated with the particular circuitry as described herein. The term "circuitry" should be understood broadly to include hardware and, in some embodiments, software for configuring the hardware. For example, in some embodiments, "circuitry" may include processing circuitry, communications circuitry, input/output circuitry, and the like. In some embodiments, other elements may provide or supplement the functionality of particular circuitry.

### Overview

Near-field communication (NFC) is a wireless technology that enables devices to connect when brought within a threshold distance of each other. In some instances, NFC technology may enable devices, such as an NFC reader and a tag, to communicate when brought within a threshold distance of each other. NFC technology may be based on one or more communication protocols and standards that enable NFC devices to communicate with each other. For example, a 13.56 megahertz (MHz) wireless communication protocol for NFC technology enables wireless communication between two NFC devices (e.g., the NFC reader and a tag) located up to a threshold distance from each other. In some instances, the threshold distance at which the NFC reader and tag communicate depends on a tag type associated with the tag. For example, a passive tag may be capable of communicating with an NFC reader at distances less than about 10 centimeters (cm) (e.g., distances of about 5-7 cm), while an active tag may be capable of communicating with an NFC reader at distances more than about 10 cm.

A passive tag may use passive load modulation to transmit data to an NFC reader. Passive load modulation includes connecting a passive load to a tag antenna and switching it on and off to modulate a power transfer from the NFC reader to the tag. For example, the NFC reader may generate an alternating electromagnetic field when located within the threshold distance of the tag. The alternating electromagnetic field may power the tag by inducing a current in an antenna in the tag. The tag may modulate the current to encode data. The NFC reader may use an antenna to detect the modulation and then decode the data. In other words, to transmit data to an NFC reader, a passive tag (e.g., a transponder powered by the NFC reader's electromagnetic field) uses passive load modulation in which the tag changes the antenna load via an internal switch.

An active tag may use active load modulation in which the tag transmits a response signal to the NFC reader actively. For example, an active tag (e.g., a transponder with its own transmitter and power source, such a battery) may generate a signal with passive load modulation characteristics and actively transmit the signal to the NFC reader. The active tag may replicate passive load modulation to generate the signal with passive load modulation characteristics. That is, a signal received at the NFC reader from an active tag may look similar to a signal received at the NFC reader from a passive tag. In other words, a signal generated using active load modulation may look similar to a signal generated using passive load modulation.

In some cases, NFC technology is used for locating tags. For example, some NFC systems for locating tags rely on multiple NFC readers that each support a single antenna to locate multiple tags. For example, a car fragrance system may include multiple fragrance channels in which each fragrance channel includes a respective NFC reader. An NFC reader in a fragrance channel may determine a type of a fragrance bottle in the fragrance channel by using NFC technology to locate a tag on the fragrance bottle. In some cases, however, the use of multiple NFC readers for locating multiple tags may lead to increased costs.

In some cases, to reduce costs, other NFC systems may use an NFC reader that supports multiple antennas for locating multiple tags. Some such systems may rely on analog or radio frequency (RF) switches to support the use of multiple antennas. That is, such systems may use analog or RF switches to enable the multiple antennas, separately or together. To locate a position of a tag using such NFC systems, the NFC readers may use the analog or RF switches to alternate between the multiple antennas, such that the NFC reader may detect modulation from the tag and, as such, attempt to locate the position of the tag via one antenna at a given time. In some cases, however, the use of an analog switch may reduce the performance of an NFC reader due to an increased internal resistance and reduced operating voltage of the analog switch. That is, some analog switches have a relatively low supply voltage and a relatively high resistance (e.g., about 100 Ohms or more), which may reduce the performance of the NFC reader. Additionally, some RF switches necessitate the use of antennas with a particular resistance (e.g., 50 Ohms), which may lead to increased costs.

Moreover, the use of an analog or RF switch to select an antenna for detecting modulation of one or more tags located on the antenna may not prevent the antenna from detecting modulation of one or more other tags located on another (relatively close) antenna due to a coupled field strength of the other antenna. For instance, some wireless charging devices, such as for cars, use a single NFC chip to support two single-ended antennas. For some such wireless charging devices, when one of the two single-ended antennas is enabled and the other of the two single-ended antennas is disable (e.g., turned off), a tag placed on the disabled single-ended antenna may be read on the enabled single-ended antenna due to the coupled field strength on the disabled single-ended antenna. Consequently, the NFC reader is unlikely to distinguish whether the tag is located on the enabled single-ended antenna or the disabled single-ended antenna, which may reduce a performance of charging logic in the wireless charging devices. In other words, some NFC readers that rely on analog or RF switches to locate tags on multiple antennas may be susceptible to coupling, which may reduce an accuracy with which the NFC readers can locate the position of the tags.

Various aspects of the present disclosure are directed to improved systems and methods for locating tag positions using a single-chip. In some embodiments, the present disclosure provides for systems and methods for using a single-chip to connect multiple single-ended antennas and locate tag positions by switching between the antennas using metal oxide semiconductor (MOS) switch circuits (e.g., without using analog or RF switches).

For example, a system of the present disclosure may include an NFC reader integrated circuit (IC) (also referred to herein as an NFC reader or single-chip) connected to multiple single-ended antennas. In some embodiments, the NFC reader may be connected to (e.g., may include or be otherwise connected to) two single-ended antennas. The two-single ended antennas may be two overlapping single-ended antennas or two non-overlapping (e.g., nearby) single-ended antennas. In some embodiments, the two single-ended antennas may be enabled together. In some other embodiments, the two single-ended antennas may be alternately enabled. That is, in some embodiments, the two single-ended antennas may be separately enabled such that, at a given time, one of the two single-ended antennas is enable and the other of the two single-ended antennas is disabled. For example, a first single-ended antenna (ANT1) may be enabled, while a second overlapping or nearby single-ended antenna (ANT2) may be disabled. The first single-ended antenna may be enabled by connecting a first connection between the first single-ended antenna and ground (e.g., a first ground terminal). The second single-ended antenna may be disabled by disconnecting a second connection between the second single-ended antenna and ground (e.g., a second ground terminal). That is, the first single-ended antenna may be enabled by switching the first single-ended antenna to ground and the second single-ended antenna may be disabled by switching the second single-ended antenna to a floating or high impedance (HZ) state. In such an example, one or more tags located on the first single-ended antenna may be identified (e.g., read) by the first single-ended antenna.

In some embodiments, the system may use MOS switches (e.g., MOS field-effect transistors (MOSFETs)) to control the first connection and the second connection. That is, in some embodiments, the system may switch between multiple single-ended antenna by using MOS switch circuits to control respective connections between the multiple single-ended antennas and the ground. For example, the system may switch the second single-ended antenna to the floating or HZ state via a MOS switch. That is, the system may use the MOS switch to disconnect the second connection between the second single-ended antenna and the second ground terminal. Additionally, the system may switch the second single-ended antenna to the ground via another MOS switch. That is, the system may use the other MOS switch to connect the first connection between the first single-ended antenna and the first ground terminal.

In some examples, the system may use the NFC reader to locate multiple tags by using the MOS switch circuits to control the connections between the single-ended antennas and the ground (e.g., to switch the single-ended antennas on or off). For example, by switching the second connection to a floating or HZ state and the first connection to ground, the NFC reader may be unable to detect a tag on the second single-ended antenna and may be able to detect a tag on the first single-ended antenna. As such, the system of the present disclosure may distinguish whether the tag is located on the first single-ended antenna or the second single-ended antenna.

In some embodiments, the system may use the NFC reader (e.g., the first single-ended antenna and the second single ended-antenna connected to the NFC reader) to locate a respective position for one or more tags. For example, in some such embodiments, the system may perform a first step in which the system enables the first single-ended antenna and disables the second single-ended antenna. In other words, in accordance with the first step, one or more signals may be obtained via a first output (RFO1) of the first single-ended antenna by switching the first single ended antenna from a floating or HZ state to ground. Additionally, in accordance with the first step, the second single ended antenna may be disabled by switching the second single-ended antenna from ground to the floating or HZ state. Accordingly, the NFC reader may read tags located on the first single-ended antenna (and may not read tags located only on the second single-ended antenna). In other words, the NFC reader may determine whether one or more tags are located on the first single-ended antenna.

Additionally, the system may perform a second step in which the system enables the second single-ended antenna and disables the first single-ended antenna. In other words, in accordance with the second step, one or more signals may be obtained via a second output (RFO2) of the second single-ended antenna by switching the second single-ended antenna from the floating to HZ state to ground. Additionally, in accordance with the second step, the first single-ended antenna may be disabled by switching the first single-ended antenna from ground to the floating or HZ state. Accordingly, in accordance with the second step, the NFC reader may read one or more tags located on the second single-ended antenna (and may not read tags located only on the first single-ended antenna). In other words, the NFC reader may determine whether one or more tags are located on the second single-ended antenna.

In some examples, RFO1 and RFO2 may be set to enable or disable via the NFC Reader IC or one or more NFC controller registers. That is, the NFC signals may be powered on by the NFC reader IC. In some such examples, the first single-ended antenna may be switched to the HZ or floating state (e.g., the first single-ended antenna may be disabled) via a first MOS switch when RFO1 is disabled. Additionally, in some such examples, the second single ended antenna may be switched to the HZ or floating state (e.g., the second single-ended antenna may be disabled) via a second MOS switch when RFO2 is disabled. In some examples, by disconnecting the first single-ended antenna from ground, the first single-ended antenna cannot couple to one or more signals of the second single-ended antenna. Similarly, by disconnecting the second single-ended antenna from ground, the second single-ended antenna cannot couple to one or more signals of the first single-ended antenna.

In some embodiments, the system may switch between multiple single-ended antenna by using external MOS switch circuits to control respective connections between the single-ended antennas and the ground. In some such embodiments, one end of a single-ended antenna (e.g., each single ended antenna) may be connected to a matching circuit and another end of the single-ended antenna may be connected to an external antenna tuning circuit (e.g., switch circuitry) which may control the connection between the single-ended antenna and the ground. That is, the external antenna tuning circuit may include a MOS switch (e.g., an N-channel MOS (NMOS) switch), which is used to control the connection between the single-ended antenna and the ground. In some such embodiments, the NMOS switch may have a switching resistance (e.g., a 1 ohm switching on resistance), which enables the NMOS switch may be used to connect or disconnect the connection between the single-ended antenna and ground.

In some other embodiments, the system may switch between multiple single-ended antenna by using internal MOS switch circuits to control respective connections between the single-ended antennas and the ground. In some such embodiments, one end of a single-ended antenna (e.g., each single ended antenna) may be connected to a matching circuit and another end of the single-ended antenna may be connected to a TRIM pin of the NFC reader. That is the other end of the single ended antenna may be connected to an internal trim switch of the NFC reader via the TRIM pin. In some embodiments, the connection between the single-ended antenna and ground may be controlled via a register of the TRIM pin. In some such embodiments, the trim switch (e.g., an interna NMOS switch) may have a switching resistance (e.g., a 6.25 ohm switching on resistance), which enables the internal NMOS switch to be used to connect or disconnect the connection between the single-ended antenna and ground. In some examples, the systems and methods for locating tag positions using a single-chip, as described herein, may provide for cost saving and simplified code flow.

### Exemplary Systems, Apparatuses, and Methods

The present disclosure provides for systems, apparatuses, and methods for locating tag positions using a single-chip described herein, which may be implemented in various embodiments.

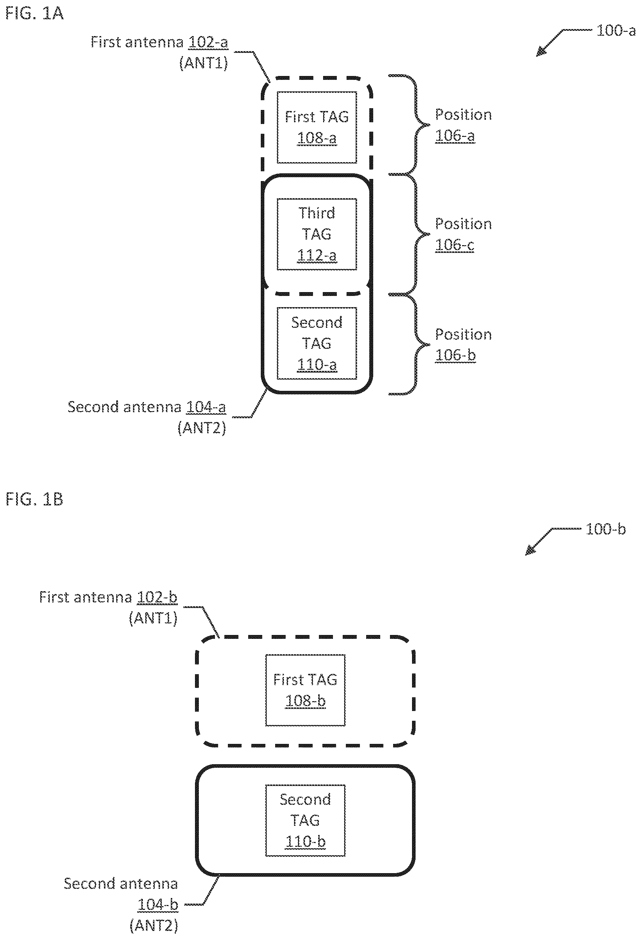

FIGs. 1A and 1B illustrate exemplary antenna configurations 100 (e.g., an antenna configuration 100-a, and antenna configuration 100-b) for locating tag positions using a single-chip in accordance with at least one embodiment of the present disclosure. As illustrated in the examples of FIGs. 1A and 1B, an NFC reader IC may support two single-ended antennas. For example, the NFC reader IC may support a first antenna (e.g., a first antenna 102-a or a first antenna 102-b, which are denoted ANT1) and a second antenna (e.g., a second antenna 104-a or a second antenna 104-b, which are denoted ANT2).

As illustrated in the example of FIG. 1A, the NFC reader may support the antenna configuration 100-a in which at least a portion of the first antenna 102-a may be overlapping with at least a portion of the second antenna 104-a. That is, in a position 106-c, the first antenna 102-a and the second antenna 104-a may be overlapping. Additionally, or alternatively, the NFC reader may support the antenna configuration 100-b in which the first antenna 102-b is non-overlapping with (e.g., nearby to) the second antenna 104-b. The NFC reader IC may use the antenna configuration 100-a or the antenna configuration 100-b to locate one or more tags on the first antenna (ANT1) or the second antenna (ANT2).

In some embodiments, the first antenna and the second antenna may be enabled separately (e.g., in an alternating manner). In some other embodiments, the first antenna and the second antenna may be enabled together (e.g., concurrently, simultaneously). In some instances, such as instances in which the first antenna and the second antenna are enabled together, one of the two antennas may detect tag(s) located on the other of the two antennas (e.g., due to coupling). In other words, when enabling a first single-ended ANT1 and a second single-ended ANT2, the first single-ended ANT1 may detect a tag on the second single-ended ANT2. Accordingly, to reduce a likelihood of coupling (e.g., to prevent the first antenna from detecting one or more tags on the second antenna and vice versa), the first single-ended antenna and the second single-ended antenna may be enabled separately. For example, the first single-ended antenna may be enabled by connecting the first single-ended antenna to a first ground terminal and the second single-ended antenna may be disabled by disconnecting the second single-ended antenna from a second ground terminal. Additionally, the first single-ended antenna may be disabled by disconnecting the first single-ended antenna from the first ground terminal and the second single-ended antenna may be enabled by connecting the second single-ended antenna to the second ground terminal. In some examples, the first single-ended antenna may be connected to (or disconnected from) the first ground terminal via a first switch and the second single-ended antenna may be connected to (or disconnected from) the second ground terminal via a second switch.

In some examples, the NFC reader IC may enable the first single-ended antenna and disable the second single-ended antenna (and vice versa) concurrently. In some other examples, the NFC reader IC may enable the first single-ended antenna and disable the second single-ended antenna (and vice versa) sequentially. For example, after enabling the first single-ended antenna ANT1, the overlapping or nearby second single-ended antenna ANT2 may be disabled by disconnecting the second single-ended antenna ANT2 from the ground (e.g., by switching the single-ended antenna ANT2 to a floating or high impedance (HZ) state) via a MOS switch. Alternatively, after enabling the second single-ended antenna ANT2, the overlapping or nearby first single-ended antenna ANT1 may be disabled by disconnecting the first single-ended antenna ANT1 from the ground (e.g., by switching the first single-ended ANT1 to a floating or high impedance (HZ) state) via another MOS switch. That is, the MOS switches can control whether the first single-ended antenna and the second single-ended antenna connect to ground or floating. In some examples, if the first single-ended antenna and the second single-ended antenna are connected to ground, the first single-ended antenna may easily couple with a signal on the second single-ended antenna due to, for example, a similar resonance frequency associated with the NFC 13.56 MHz. However, if the first single-ended antenna is disconnected from ground, the first single-ended antenna cannot couple the signal of the second single-ended antenna.

In some examples, the NFC reader IC may enable the two single-ended antennas together to read multiple tags simultaneously. For example, as illustrated in the example of FIG. 1A, the NFC reader IC may enable the two single-ended antennas together to read three tags (e.g., a first tag 108-a, a second tag 110-a, and a third tag 112-a). Alternatively, as illustrated in the example of FIG. 1B, the NFC reader IC may enable the two single-ended antennas together to read 2 tags (e.g., a first tag 108-b and a second tag 110-b).

In some other examples, the NFC reader IC may enable the two single-ended antennas separately to read multiple tags sequentially. For example, as illustrated in the example of FIG. 1A, the NFC reader IC may enable the first antenna 102-a and disable the second antenna 104-a to read the first tag 108-a and the third tag 112-a. In other words, to obtain a first signal via the first antenna 102-a, the NFC reader IC may enable the first antenna 102-a and disable the second antenna 104-a. The first signal obtained from the first antenna 102-a may include information indicative of one or more tags located on (e.g., read by) the first antenna 102-a. In the example of FIG. 1A, the first signal may include information indicative of a first identifier associated with the first tag 108-a and a third identifier associated with the third tag 112-a. Accordingly, the NFC reader IC may determine that the first tag 108-a and the third tag 112-a are located on the first antenna 102-a.

In some examples, after obtaining the first signal, the NFC reader IC may disable the first antenna 102-a and enable the second antenna 104-a to read the second tag 110-a and the third tag 112-a. In other words, to obtain a second signal via the second antenna 104-a, the NFC reader IC may enable the second antenna 104-a and disable the first antenna 102-a. The second signal obtained from the second antenna 104-a may include information indicative of one or more tags located on (e.g., read by) the second antenna 104-a. In the example of FIG. 1A, the second signal may include information indicative a second identifier associated with the second tag 110-a and the third identifier associated with the third tag 112-a. Accordingly, the NFC reader IC may determine that the second tag 110-a and the third tag 112-a are located on the second antenna 104-a.

The NFC reader IC may use the information obtained via the first signal and the second signal to determine a respective location of the first tag 108-a, the second tag 110-a, and the third tag 112-a. In some examples, the NFC reader IC may use the information obtained via the first signal and the second signal to locate a respective position of the first tag 108-a, the second tag 110-a, and the third tag 112-a. For example, based on the first signal indicating the first identifier and the second signal failing to indicate the first identifier, the NFC reader IC may determine that the first tag 108-a is located in a position 106-a (e.g., located only on the first antenna 102-a). Similarly, based on the second signal indicating the second identifier and the first signal failing to indicate the second identifier, the NFC reader IC may determine that the second tag 110-a is located in a position 106-b (e.g., located only on the second antenna 104-a). Additionally, based on the first signal and the second signal both indicating the third identifier, the NFC reader IC may determine that the third tag 112-a is located in the position 106-c (e.g., located on both the first antenna 102-a and the second antenna 104-a). Although the example of FIG. 1A illustrates three tags, it is to be understood that the NFC reader IC may enable the two single-ended antennas separately to read (and determine a respective location of) of less than three tags or more than three tags.

In some other examples, as illustrated in the example of FIG. 1B, the NFC reader IC may enable the first antenna 102-b and disable the second antenna 104-b to read a first tag 108-b. In other words, to obtain a first signal via the first antenna 102-b, the NFC reader IC may enable the first antenna 102-b and disable the second antenna 104-b. The first signal obtained from the first antenna 102-b may include information indicative of one or more tags located on (e.g., read by) the first antenna 102-b. In the example of FIG. 1B, the first signal may include information indicative of a first identifier associated with the first tag 108-b. Accordingly, the NFC reader IC may determine that the first tag 108-b is located on the first antenna 102-b. Additionally, the NFC reader IC may disable the first antenna 102-b and enable the second antenna 104-b to read a second tag 110-b. In other words, to obtain a second signal via the second antenna 104-b, the NFC reader IC may enable the second antenna 104-b and disable the first antenna 102-b. The second signal obtained from the second antenna 104-b may include information indicative of one or more tags located on (e.g., read by) the second antenna 104-b. In the example of FIG. 1B, the second signal may include information indicative a second identifier associated with the second tag 110-b. Accordingly, the NFC reader IC may determine that the second tag 110-a is located on the second antenna 104-b. Thus, the NFC reader IC may use the information obtained via the first signal and the second signal to determine a respective location of the first tag 108-b and the second tag 110-b. That is, based on the first signal indicating the first identifier and the second signal failing to indicate the first identifier, the NFC reader IC may determine that the first tag 108-b is located on the first antenna 102-b. Similarly, based on the second signal indicating the second identifier and the first signal failing to indicate the second identifier, the NFC reader IC may determine that the second tag 110-b is located on the second antenna 104-b. Although the example of FIG. 1A illustrates two tags, it is to be understood that the NFC reader IC may enable the two single-ended antennas separately to read (and determine a respective location of) of a single tag and/or more than two tags (e.g., three tags, four tags).

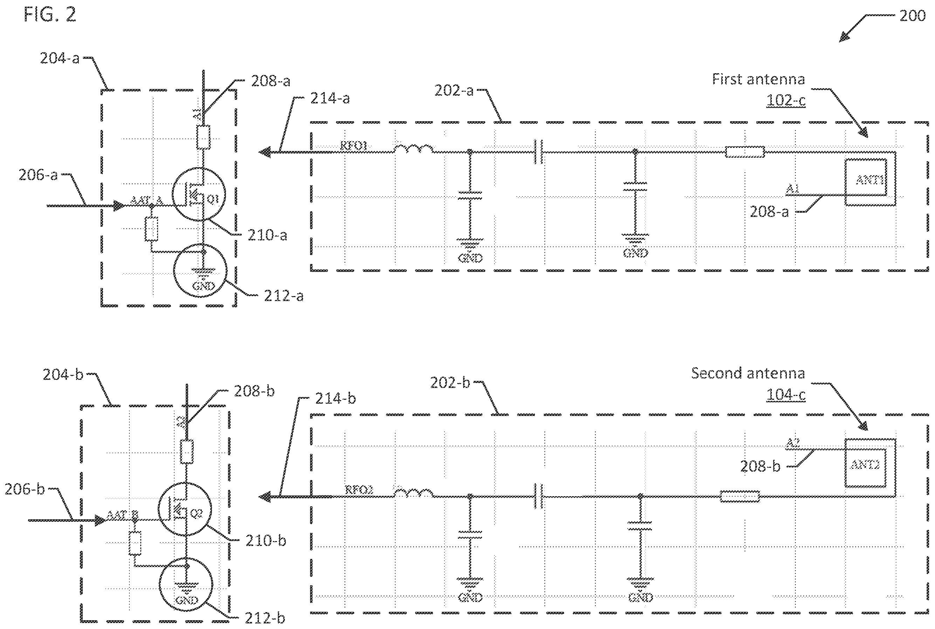

FIG. 2 illustrates an exemplary diagram of a system 200 configured for locating tag positions using a single-chip in accordance with at least one embodiment of the present disclosure. As illustrated in the example of FIG. 2, the system 200 may include an antenna circuitry 202-a coupled to a switch circuitry 204-a. Additionally, the system 200 includes an antenna circuitry 202-b coupled to a switch circuitry 204-b.

The antenna circuitry 202-a may include a first antenna 102-c, which may be an example of a first antenna illustrated by and described with reference to FIGs. 1A and 1B. As illustrated in the example of FIG. 2, the antenna circuitry 202-a may include one or more other electrical components (e.g., resistors, inductors, capacitors) to support one or more functionalities of the first antenna 102-c. The switch circuitry 204-a may include a switch 210-a, which may be used to control a first connection between the first antenna 102-c and ground (and thus enable or disable the first antenna 102-c). As illustrated in the example of FIG. 2, the switch circuitry 204-a may include one or more other electrical components (e.g., resistors) to support one or more functionalities of the switch 210-a. The system 200 may operate the switch 210-a to enable or disable the first antenna 102-c. In some examples, enabling the first antenna 102-c may include connecting the first antenna 102-c to a ground terminal 212-a via the switch 210-a. In other words, to obtain one or more first signals, such as an output signal 214-a, from the first antenna 102-c via a first output pin associated with the first antenna 102-c (denoted RFO1), the system 200 may operate the switch 210-a in accordance with an on state to connect the first antenna 102-c to the ground terminal 212-a. That is, to enable the first antenna 102-c, the system 200 may operate the switch 210-a to switch from an off state to the on state, such that an end of the first antenna 102-c may be connected to the ground terminal 212-a. In some examples, disabling the first antenna 102-c may include disconnecting the first antenna 102-c from the ground terminal 212-a via the switch 210-a. In other words, to disable the first antenna 102-c, the system 200 may operate the switch 210-a in accordance with the off state (e.g., may operate the switch 210-a to switch from the on state to the off state) to disconnect the first antenna 102-c from the ground terminal 212-a.

The antenna circuitry 202-b may include a second antenna 104-c, which may be an example of a second antenna illustrated by and described with reference to FIGs. 1A and 1B. As illustrated in the example of FIG. 2, the antenna circuitry 202-b may include one or more other electrical components (e.g., resistors, inductors, capacitors) to support one or more functionalities of the second antenna 104-c The switch circuitry 204-b may include a switch 210-b, which may be used to control a second connection between the second antenna 104-c and ground (and thus enable or disable the second antenna 104-c). As illustrated in the example of FIG 2, the switch circuitry 204-b may include one or more other electrical components (e.g., resistors) to support one or more functionalities of the switch 210-b. The system 200 may operate the switch 210-a to enable or disable the second antenna 104-c. In some examples, enabling the second antenna 104-c may include connecting the second antenna 104-c to a ground terminal 212-b via the switch 210-b. In other words, to obtain one or more second signals, such as an output signal 214-b, from the second antenna 104-c via a second output pin associated with the second antenna 104-c (denoted RFO2), the system 200 may operate the switch 210-b in accordance with an on state to connect the second antenna 104-c to the ground terminal 212-b. That is, to enable the second antenna 104-c, the system 200 may operate the switch 210-b to switch from an off state to the on state, such that an end of the second antenna 104-c may be connected to the ground terminal 212-b. In some examples, disabling the second antenna 104-c may include disconnecting the second antenna 104-c from the ground terminal 212-b via the switch 210-b. In other words, to disable the second antenna 104-c, the system 200 may operate the switch 210-b in accordance with the off state (e.g., may operate the switch 210-b to switch from the on state to the off state) to disconnect the second antenna 104-c from the ground terminal 212-b.

In some embodiments, the system 200 may operate the switches 210 to determine a location of one or more tags located on the first antenna 102-c and/or the second antenna 104-c. For example, in some embodiments, the first antenna 102-c and the second antenna 104-c may be configured in accordance with the antenna configuration 100-a illustrated by and described with reference to FIG. 1A. That is, at least a portion of the first antenna 102-c may be overlapping with at least a portion of the second antenna 104-c. In some other embodiments, the first antenna 102-c and the second antenna 104-c may be configured in accordance with the antenna configuration 100-b illustrated by and described with reference to FIG. 1B. That is, the first antenna 102-c may be non-overlapping with the second antenna 104-c.

In some examples, in a first step, the system 200 may enable the first antenna 102-c and may disable the second antenna 104-c, such that the system 200 may determine whether one or more tags are located on the first antenna 102-c. The system 200 may enable the first antenna 102-c by operating the switch 210-a in accordance with the on state to connect the first antenna 102-c to the ground terminal 212-a and may disable the second antenna 104-c by operating the switch 210-b in accordance with the off state by disconnecting the second antenna 104-c from the ground terminal 212-b. That is, the system 200 may enable the first antenna 102-c by switching ANT1 from a floating or HZ state to ground via the switch 210-a and may disable the second antenna 104-c by switching ANT2 from ground to a floating or HZ state via the switch 210-b. In some examples, by enabling the first antenna 102-c and disabling the second antenna 104-c, the NFC reader may read one or more tags located on ANT1 (and may thus determine whether one or more tags are located on ANT1).

Additionally, in a second step, the system 200 may disable the first antenna 102-c and may enable the second antenna 104-c, such that the system 200 may determine whether one or more tags are located on the second antenna 104-c. The system 200 may disable the first antenna 102-c by operating the switch 210-a in accordance with the off state to disconnect the first antenna 102-c from the ground terminal 212-a and may enable the second antenna 104-c by operating the switch 210-b in accordance with the on state by connecting the second antenna 104-c to the ground terminal 212-b. That is, the system 200 may disable the first antenna 102-c (ANT1) by switching ANT1 from ground to the floating or HZ state via the switch 210-a and may enable the second antenna 104-c (ANT2) by switching ANT2 from the floating or HZ state to ground via the switch 210-b. In some examples, by enabling the second antenna 104-c (ANT2) and disabling the first antenna 102-c (ANT1), the NFC reader may read one or more tags located on ANT2 (and may thus determine whether one or more tags are located on ANT2). Accordingly, the NFC reader may locate a respective position for one or more tags. That is, the system 200 may operate the switches 210 to locate one or more respective positions for one or more tags.

In the example of FIG. 2, the switches 210 may be examples of MOS switches (e.g., NMOS switches), which are external to circuitry that includes the first antenna 102-c and the second antenna 104-c. In other words, the switches 210 may be external NMOS switches. For example, the switch circuitry 204-a may be external to the antenna circuitry 202-a and the switch circuitry 204-b may be external to the antenna circuitry 202-b. In some examples, the switch circuitry 204 may be controlled by the NFC reader IC. In some other examples, the switch circuitry 204 may be controlled by a controller that is external to the NFC reader IC. For example, control signals to the NMOS switches may be output via one or more general purpose input/output (GPIO) pins associated with the NFC reader IC or via one or more GPIO pins associated with a microcontroller unit (MCU). In some such examples, the NFC reader IC may be in communication with the MCU.

In some examples, the switch circuitry 204-a and the switch circuitry 204-b may be examples of antenna tuning circuits external to the antenna circuitry 202. In some such examples, to operate the switch 210-a in accordance with the on state or the off state, an antenna tuning signal 206-a may be output to the switch circuitry 204-a. The antenna tuning signal 206-a may be output via the NFC reader IC or the MCU. That is, the antenna tuning signal 206-a may be output via a GPIO pin of the NFC reader IC or a GPIO pin of the MCU. The antenna tuning signal 206-a may be indicative of a first antenna tuning voltage associated with the switch 210-a. In other words, the antenna tuning signal 206-a may set the first antenna tuning voltage for the switch 210-a to a first value to operate the switch 210-a in accordance with the on state or the off state. That is, the first value may correspond to the on state or the off state. For example, as illustrated in the example of FIG. 2, the switch circuitry 204-a (e.g., the switch 210-a included in the switch circuitry 204-a) may receive the antenna tuning signal 206-a via a first antenna tuning pin (denoted AAT A), which may set the first antenna tuning voltage to the first value. The switch 210-a may operate in accordance with the on state or the off state based on the first value. In one non-limiting example, the first value may correspond to the on state. As such, reception of the antenna tuning signal 206-a may cause an end 208-a (denoted A1) of the first antenna 102-c to be connected to the ground terminal 212-a. The antenna tuning voltage may be autonomously determined (e.g., via the NFC reader IC and/or controller), or a user may set the antenna tuning voltage, for example, via a first antenna tuning control register associated with the NFC reader IC and/or controller. In some examples, to operate the switch 210-b in accordance with the on state or the off state, an antenna tuning signal 206-b may be output to the switch circuitry 204-b. The antenna tuning signal 206-b may be output via the NFC reader IC or the MCU. That is, the antenna tuning signal 206-b may be output via a GPIO pin of the NFC reader IC or a GPIO pin of the MCU. The antenna tuning signal 206-b may be indicative of a second antenna tuning voltage associated with the switch 210-b. In other words, the antenna tuning signal 206-b may set the second antenna tuning voltage for the switch 210-b to a second value to operate the switch 210-b in accordance with the on state or the off state. That is, the second value may correspond to the on state or the off state. For example, as illustrated in the example of FIG. 2, the switch circuitry 204-b (e.g., the switch 210-b included in the switch circuitry 204-b) may receive the antenna tuning signal 206-b via a second antenna tuning pin (denoted AAT B), which may set the second antenna tuning voltage to the second value. The switch 210-b may operate in accordance with the on state or the off state based on the second value. In one non-limiting example, the second value may correspond to the off state. As such, reception of the antenna tuning signal 206-b may cause an end 208-b (denoted A2) of the second antenna 104-c to be disconnected from the ground terminal 212-b. The antenna tuning voltage may be autonomously set (e.g., via the NFC reader IC or controller), or a user may set the antenna tuning voltage, for example, via a second antenna tuning control register associated with the NFC reader IC and/or controller.

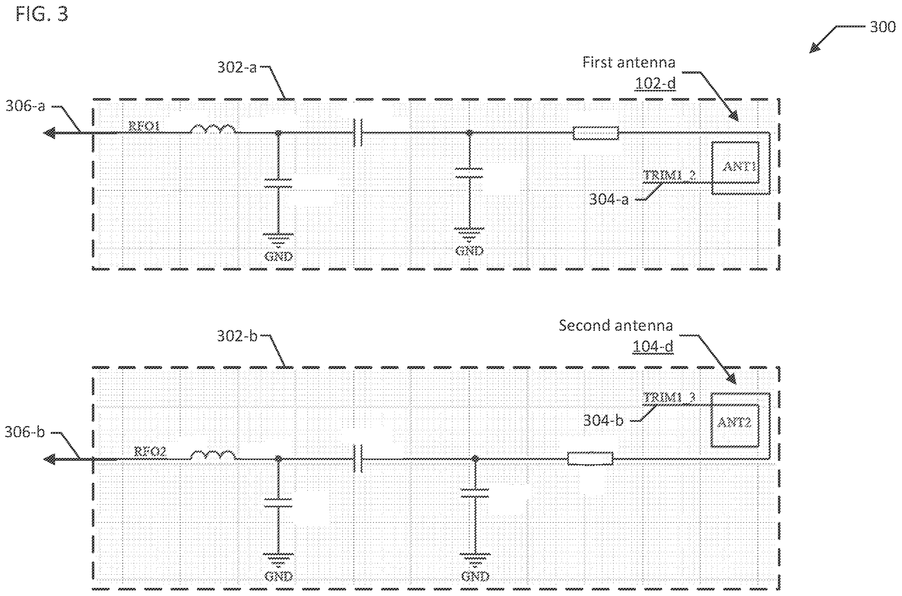

FIG. 3 illustrates an exemplary diagram of a system 300 configured for locating tag positions using a single-chip in accordance with at least one embodiment of the present disclosure. As illustrated in the example of FIG. 3, the system 300 may include an antenna circuitry 302-a and an antenna circuitry 302-b. The antenna circuitry 302-a may include a first antenna 102-d, which may be an example of a first antenna illustrated by and described with reference to FIGs. 1A, 1B, and 2. As illustrated in the example of FIG. 3, the antenna circuitry 302-a may include one or more other electrical components (e.g., resistors, inductors, capacitors) to support one or more functionalities of the first antenna 102-d. The antenna circuitry 302-b may include a second antenna 104-d, which may be an example of a second antenna illustrated by and described with reference to FIGs. 1A, 1B, and 2. As illustrated in the example of FIG. 3, the antenna circuitry 302-b may include one or more other electrical components (e.g., resistors, inductors, capacitors) to support one or more functionalities of the second antenna 104-d.

In some examples, the antenna circuitry 302 may be include in an NFC reader IC. Additionally, in some such examples, the NFC reader IC may include one more MOS switches (e.g., two NMOS switches) for controlling the first antenna 102-d and the second antenna 104-d. That is, the NFC reader IC may include internal NMOS switches (e.g., with a switching on resistance of 6.25 Ohms or another suitable resistance) for connecting or disconnecting respective connections between the single-ended antennas and ground. In other words, the NFC reader IC may include a first trim switch used for connecting or disconnecting a first connection between the first antenna 102-d and a first ground terminal and may also include a second trim switch used for connecting or disconnecting a second connection between the second antenna 104-d and a second ground terminal.

As illustrated in the example of FIG. 3, an end 304-a of the first antenna 102-d may be connected to a first TRIM pin (denoted TRIM1_2) associated with the first trim switch of the NFC reader IC. In some examples, another end of the first antenna 102-d may be connected to a matching circuit. Additionally, as illustrated in the example of FIG. 3, an end 304-b of the second antenna 104-d may be connected to a second TRIM pin (denoted TRIM1_3) associated with the second trim switch of the NFC reader IC. In some examples, another end of the second antenna 104-d may be connected to a matching circuit. In other words, in some examples, one end of the single-ended antennas is connected to the matching circuit, and the other end of the single-ended antennas is connected to a TRIM pin of the chip.

In some examples, one or more registers may be used to control the first TRIM pin and the second TRIM pin. For example, a first register associated with the first TRIM pin may be used to control the first connection between the first antenna 102-d and the first ground terminal and a second register associated with the second TRIM pin (a same register as or a different register than the first register) may be used to control the second connection between the second antenna 104-d and the second ground terminal. That is, the respective connection between the single-ended antennas and ground may be controlled by setting the register(s) of the TRIM pins. For example, the NFC reader IC may use the TRIM pins for antenna calibration control. Accordingly, an antenna calibration control register may be used to control the first TRIM pin (and thus the first trim switch) and the second TRIM pin (and thus the second trim switch). In some examples, the antenna calibration control register may be configured in accordance with the following data structure of Table 1:

| **Table 1** | | | | |
|---|---|---|---|---|
| Bit | Parameter Name | Default | Function | Comments |
| 7 | trim_s | 0 | 0: trim switches are defined by result of Calibrate Antenna command | defines source of driving switches on TRIMx pins |
| | | | 1: trim switches are defined by bits tre_x written in this register | |
| 6 | tre_3 | 0 | MSB | trim switches are defined by data written in this register in case trim_s=1. A bit set to 1 switches on transistor on TRIM1_x and TRIM2_x pin. |
| 5 | tre_2 | 0 | - | |
| 4 | tre_1 | 0 | - | |
| 3 | tre_0 | 0 | LSB | |

As illustrated in Table 1, TRIM1_2 may correspond to the first trim switch, which is associated with a first antenna calibration parameter denoted tre_2 and TRIM1_3 may correspond to the second trim switch, which is associated with a second antenna calibration parameter denoted tre_3. Accordingly, the NFC reader IC may operate the first trim switch in accordance with the on state to connect the end 304-a of the first antenna 102-d to the first ground terminal by setting the first antenna calibration parameter (tre_2) to a value of 1. Alternatively, the NFC reader IC may operate the first switch in accordance with the off state to disconnect the end 304-a of the first antenna 102-d from the first ground terminal by setting the first antenna calibration parameter (tre_2) to a value of 0. The NFC reader IC may operate the second trim switch in accordance with the on state to connect the end 304-b of the second antenna 104-d to the second ground terminal by setting the second antenna calibration parameter (tre_3) to a value of 1. Alternatively, the NFC reader IC may operate the second switch in accordance with the off state to disconnect the end 304-b of the second antenna 104-d from the second ground terminal by setting the second antenna calibration parameter (tre_3) to a value of 0. In some examples, a bit associated with the second antenna calibration parameter (tre_3) may correspond to a most significant bit (MSB) associated with the antenna calibration control register and another bit associated with another antenna calibration control parameter (e.g., tre_0) may correspond to a least significant bit (LSB) associated with the antenna calibration control register.

In some embodiments, the system 300 may operate the trim switches to determine a location of one or more tags located on the first antenna 102-d and/or the second antenna 104-d. For example, in some embodiments, the first antenna 102-d and the second antenna 104-d may be configured in accordance with the antenna configuration 100-a illustrated by and described with reference to FIG. 1A. That is, at least a portion of the first antenna 102-d may be overlapping with at least a portion of the second antenna 104-d. In some other embodiments, the first antenna 102-d and the second antenna 104-d may be configured in accordance with the antenna configuration 100-b illustrated by and described with reference to FIG. 1B. That is, the first antenna 102-d may be non-overlapping with the second antenna 104-d.

In some examples, in a first step, the system 300 may enable the first antenna 102-d and may disable the second antenna 104-d, such that the system 300 may determine whether one or more tags are located on the first antenna 102-d. The system 300 may enable the first antenna 102-d by operating the first trim switch in accordance with the on state (e.g., by setting a value of tre_2 to 1) to connect the first antenna 102-d to the first ground terminal and may disable the second antenna 104-d by operating the second trim switch in accordance with the off state (e.g., by setting a value of tre_3 to 0) to disconnect the second antenna 104-d from the second ground terminal. In some examples, by enabling the first antenna 102-d and disabling the second antenna 104-d, the NFC reader IC may read one or more tags located on the first antenna 102-d and, as such, may determine whether one or more tags are located on the first antenna 102-d. That is, by enabling the first antenna 102-d and disabling the second antenna 104-d, the NFC reader IC may obtain one or more first signals, such as an output signal 306-a, from the first antenna 102-d via a first output pin (denoted RFO1) associated with the first antenna 102-d. In some examples, such as examples in which one or more tags are located on the first antenna 102-d, the output signal 306-a may be indicative of one or more identifiers associated with the one or more tags (e.g., may be indicative of a respective identifier associated with each tag located on the first antenna 102-d).

In some examples, in a second step, the system 300 may disable the first antenna 102-d and may enable the second antenna 104-d, such that the system 300 may determine whether one or more tags are located on the second antenna 104-d. The system 300 may disable the first antenna 102-d by operating the first trim switch in accordance with the off state (e.g., by setting a value of tre_2 to 0) to disconnect the first antenna 102-d from the first ground terminal and may enable the second antenna 104-d by operating the second trim switch in accordance with the on state (e.g., by setting a value of tre_3 to 1) to connect the second antenna 104-d to the second ground terminal. In some examples, by disabling the first antenna 102-d and enabling the second antenna 104-d, the NFC reader IC may read one or more tags located on the second antenna 104-d and, as such, may determine whether one or more tags are located on the second antenna 104-d. That is, by disabling the first antenna 102-d and enabling the second antenna 104-d, the NFC reader IC may obtain one or more second signals, such as an output signal 306-b, from the second antenna 104-d via a second output pin (denoted RFO2) associated with the second antenna 104-d. In some examples, such as examples in which one or more tags are located on the second antenna 104-d, the output signal 306-b may be indicative of one or more identifiers associated with the one or more tags (e.g., may be indicative of a respective identifier associated with each tag located on the second antenna 104-d). Accordingly, the NFC reader IC may use the internal trim switches to locate a respective position for one or more tags. That is, the system 300 may operate the internal trim switches to locate one or more respective positions for one or more tags.

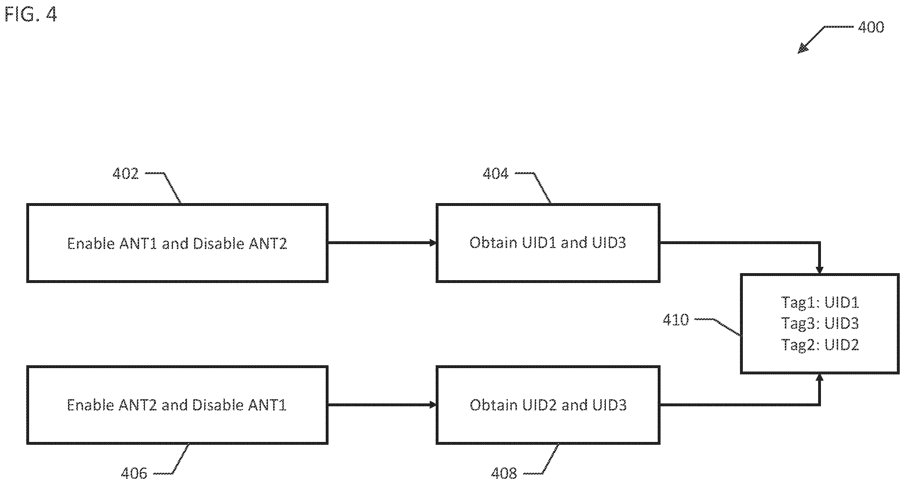

FIG. 4 illustrates an exemplary block diagram 400 of operations (e.g., an algorithm) that support systems and methods for locating tag positions using a single-chip in accordance with at least one embodiment of the present disclosure. The operations illustrated in FIG. 4 may be implemented by the system 200 or the system 300 illustrated by and described with reference to FIG 2 and FIG. 3, respectively. That is, the operations may be implemented by an NFC reader IC (e.g., one single-chip) to locate multiple tags in which external or internal NMOS switches are used to switch on or off the single-ended antennas. Additionally, the operations illustrated in FIG. 4 may be implemented in accordance with the antenna configuration 100-a or the antenna configuration 100-b illustrated by and described with reference to FIG. 1A and FIG. 1B, respectively. That is, when enabling a single-ended antenna, an overlapping or nearby single-ended antenna may be disconnected from the ground such that one or more tags on the overlapping or nearby single-ended antenna may not be detected by the enabled single-ended antenna.

At operation 402, in accordance with a first step, the NFC reader IC may enable a first antenna (ANT1) and may disable a second antenna (ANT2). In some examples, the NFC reader IC may enable the first antenna by setting a first antenna tuning voltage associated with the first switch to a first value and may disable the second antenna by setting a second antenna tuning voltage associated with the second switch to a second value. In some other examples, the NFC reader IC may enable the first antenna by setting a first antenna calibration parameter associated with the first switch to a first value and may disable the second antenna by setting a second antenna calibration parameter associated with the second switch to a second value.

At operation 404, in accordance with the first step, the NFC reader IC may obtain a first identifier (UID1) associated with a first tag (Tag1) and a third identifier (UID3) associated with a third tag (Tag3). For example, based on enabling the first antenna and disabling the second antenna, the NFC reader IC may obtain a first signal via the first antenna and the first signal may be indicative of UID1 and UID3.

At operation 406, after obtaining the first signal, in accordance with a second step, the NFC reader IC may disable the first antenna (ANT1) and may enable the second antenna (ANT2). In some examples, the NFC reader IC may disable the first antenna by setting the first antenna tuning voltage associated with the first switch to the second value and may enable the second antenna by setting the second antenna tuning voltage associated with the second switch to the first value. In some other examples, the NFC reader IC may disable the first antenna by setting the first antenna calibration parameter associated with the first switch to the second value and may enable the second antenna by setting the second antenna calibration parameter associated with the second switch to the first value.

At operation 408, in accordance with the second step, the NFC reader IC may obtain a second identifier (UID2) associated with a second tag (Tag2) and the third identifier (UID3) associated with the third tag (Tag3). For example, based on disabling the first antenna and enabling the second antenna, the NFC reader IC may obtain a second signal via the second antenna and the second signal may be indicative of UID2 and UID3.

At operation 410, based on the first signal and the second signal, the NFC reader IC may determine a respective location of the first tag, the second tag, and the third tag. That is, based on the first signal being indicative of the first identifier and the third identifier and the second signal being indicative of the second identifier and the third identifier, the NFC reader IC may determine that the first tag is located on the first antenna, the second tag is located on the second antenna, and the third tag is located on both the first antenna and the second antenna (e.g., in a middle position, such as the position 106-c illustrated by and described with reference to FIG. 1A). In other words, based on reading Tag1 and Tag3 via ANT1 at operation 404 and reading Tag2 and Tag3 via ANT2 at operation 408, the NFC reader IC may locate the Tag1, Tag2, and Tag3 positions. Although the example of FIG. 4 illustrates steps to locate three tags, it is to be understood that if there are one or two tags on the antennas, the same steps may be used to locate the one or two tags.

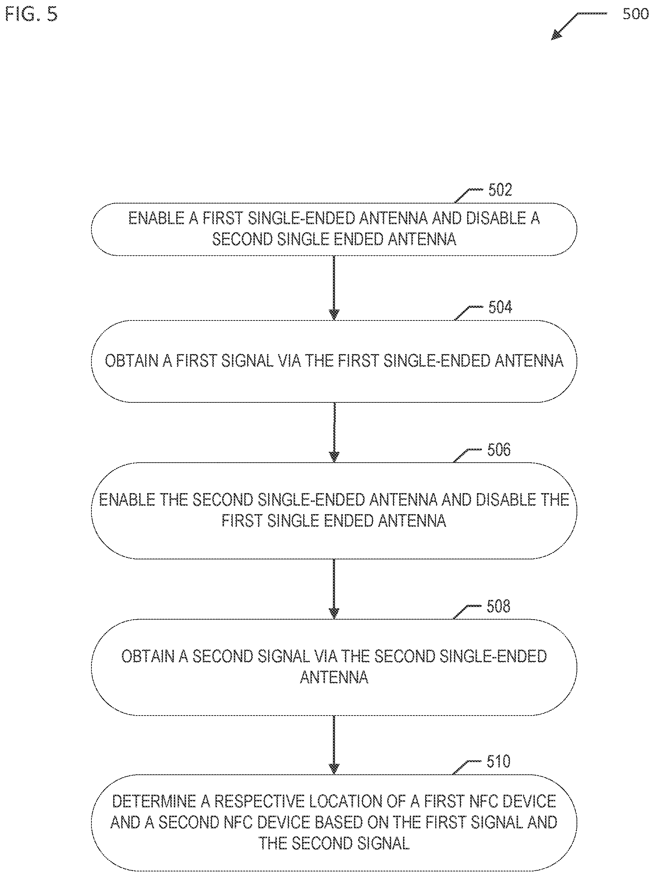

FIG. 5 illustrates an exemplary flowchart 500 of operations that support systems and methods for locating tag positions using a single-chip in accordance with at least one embodiment of the present disclosure. FIG. 5 may be implemented by one or more aspects illustrated by and described with reference to at least FIGs. 1A, 1B, 2, 3, and 4. For example, the operations illustrated in FIG. 5 may be implemented by the system 200 or the system 300 illustrated by and described with reference to FIG 2 and FIG. 3, respectively. Additionally, the operations illustrated in FIG. 5 may be implemented in accordance with the antenna configuration 100-a or the antenna configuration 100-b illustrated by and described with reference to FIG. 1A and FIG. 1B, respectively.

At operation 502, a system including an NFC reader may enable a first single-ended antenna of the NFC reader and disable a second single-ended antenna of the NFC reader. In some examples, to enable the first single-ended antenna, the system may cause connection of the first single-ended antenna to a first ground terminal. Additionally, to disable the second single-ended antenna, the system may cause disconnection of the second single-ended antenna from a second ground terminal.

In some examples, the system may enable the first single-ended antenna by setting a first antenna tuning voltage associated with a first external switch to a first value and may disable the second single-ended antenna by setting a second antenna tuning voltage associated with a second external switch to a second value. The first antenna tuning voltage and the second antenna tuning voltage may be set via one or more control signals, such as antenna tuning signals illustrated by and described with reference to FIG. 2. In some examples, the one or more control signals may be GPIO signal(s), such as GPIO signal(s) from the NFC reader or GPIO signal(s) from an MCU. In some other examples, the system may enable the first single-ended antenna by setting a first antenna calibration parameter associated with a first internal switch to a first value and may disable the second single-ended antenna by setting a second antenna calibration parameter associated with a second internal switch to a second value. The first antenna calibration parameter and the second calibration parameter may be set via one or more calibration control registers, such as an antenna calibration control register described with reference to FIG. 3.

At operation 504, the NFC reader may obtain a first signal via the first single-ended antenna based on enabling the first single-ended antenna and disabling the second single-ended antenna. In some examples, the first signal is indicative of at least a first identifier associated with a first NFC device (e.g., Tag1).

At operation 506, after obtaining the first signal, the system may enable the second single-ended antenna of the NFC reader and may disable the first single-ended antenna of the NFC reader. In some examples, to enable the second single-ended antenna, the system may cause connection of the second single-ended antenna to the second ground terminal. Additionally, to disable the first single-ended antenna, the system may cause disconnection of the first single-ended antenna from the first ground terminal.

In some examples, the system may disable the first single-ended antenna by setting the first antenna tuning voltage associated with the first external switch to the second value and may enable the second single-ended antenna by setting the second antenna tuning voltage associated with the second external switch to the first value. In some other examples, the NFC reader IC may disable the first single-ended antenna by setting the first antenna calibration parameter associated with the first internal switch to the second value and may enable the second single-ended antenna by setting the second antenna calibration parameter associated with the second internal switch to the first value.

At operation 508, the NFC reader may obtain a second signal via the second single-ended antenna based on enabling the second single-ended antenna and disabling the first single-ended antenna. In some examples, the second signal is indicative of at least a second identifier associated with a second NFC device (e.g., Tag2).

At operation 510, the NFC reader may determine a respective location of the first NFC device and the second NFC device based on the first signal and the second signal. For example, the NFC reader may determine the respective location of the first NFC device and the second NFC device based on the first signal being indicative of the first identifier and the second signal being indicative of the second identifier.

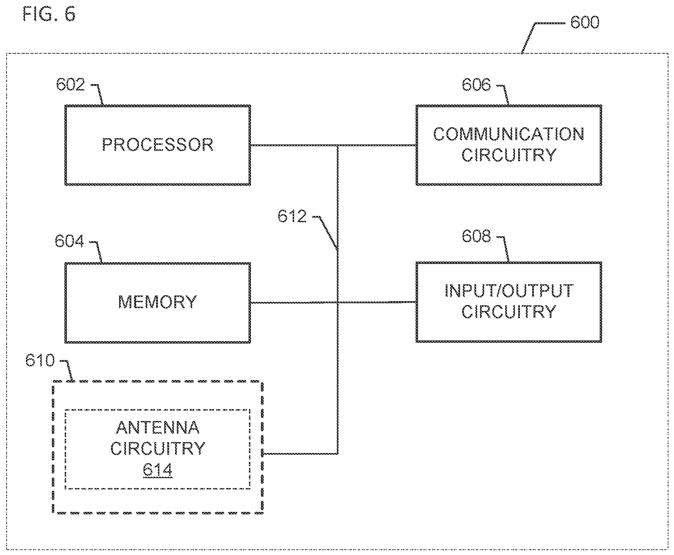

FIG. 6 illustrates an exemplary device 600 that support systems and methods for locating tag positions using a single-chip in accordance with at least one embodiment of the present disclosure. FIG. 6 may implement one or more aspects illustrated by and described with reference to FIGs. 1A, 1B, 2, 3, 4, and 5. The device 600 may be a device for an application, apparatus, and/or a system. For example, the device 600 may be, or be implemented in an NFC reader or a device for another application, such those described herein. The device 600 may be a system and/or apparatus that includes a processor 602, memory 604, communication circuitry 606, input/output circuitry 608, NFC reader circuitry 610, and all of which may be connected by a bus or buses 612. It should be appreciated that, in some embodiments, the device 600 may include or be otherwise coupled to one or more other components, such as a power source, a load(s), and/or a controller for one or more switches. The power source, controller, and/or load(s) may be internal or external to the device 600. For example, the power source, load, and/or controller may be coupled to at least the NFC reader circuitry 610 via a bus or one or more connectors.

The processor 602, although illustrated as a single block, may be comprised of a plurality of components and/or processor circuitry. The processor 602 may be implemented as, for example, various components comprising one or a plurality of microprocessors with accompanying digital signal processors; one or a plurality of processors without accompanying digital signal processors; one or a plurality of coprocessors; one or a plurality of multi-core processors; processing circuits; and various other processing elements. The processor may include integrated circuits. In various embodiments, the processor 602 may be configured to execute applications, instructions, and/or programs stored in the processor 602, or otherwise accessible to the processor 602. When executed by the processor 602, these applications, instructions, and/or programs may enable the execution of one or a plurality of the operations and/or functions described herein. Regardless of whether it is configured by hardware, firmware/software methods, or a combination thereof, the processor 602 may comprise entities capable of executing operations and/or functions according to the embodiments of the present disclosure when correspondingly configured.

The memory 604 may comprise, for example, a volatile memory, a non-volatile memory, or a certain combination thereof. Although illustrated as a single block, the memory 604 may comprise a plurality of memory components. In various embodiments, the memory 604 may comprise, for example, a random access memory, a cache memory, a flash memory, a hard disk, a circuit configured to store information, or a combination thereof. The memory 604 may be configured to write or store data, information, application programs, instructions, etc. so that the processor 602 may execute various operations and/or functions according to the embodiments of the present disclosure. For example, in at least some embodiments, a memory 604 may be configured to buffer or cache data for processing by the processor 602. Additionally, or alternatively, in at least some embodiments, the memory 604 may be configured to store program instructions for execution by the processor 602. The memory 604 may store information in the form of static and/or dynamic information. When the operations and/or functions are executed, the stored information may be stored and/or used by the processor 602.

The communication circuitry 606 may be implemented as a circuit, hardware, computer program product, or a combination thereof, which is configured to receive and/or transmit data from/to another component or apparatus. The computer program product may use computer-readable program instructions stored on a computer-readable medium (e.g., memory) and executed by a processor 602. In various embodiments, the communication circuitry 606 (as with other components discussed herein) may be at least partially implemented as part of the processor 602 or otherwise controlled by the processor 602. The communication circuitry 606 may communicate with the processor 602, for example, through a bus 612. Such a bus 612 may connect to the processor 602, and it may also connect to one or more other components of the processor 602. The communication circuitry 606 may be comprised of, for example, transmitters, receivers, transceivers, network interface cards and/or supporting hardware and/or firmware/software and may be used for establishing communication with another component(s), apparatus(es), and/or system(s). The communication circuitry 606 may be configured to receive and/or transmit data that may be stored by memory by using one or more protocols that can be used for communication between components, apparatuses, and/or systems.

The input/output circuitry 608 may communicate with the processor 602 to receive instructions input by an operator and/or to provide audible, visual, mechanical, or other outputs to an operator. The input/output circuitry 608 may comprise supporting devices, such as a keyboard, a mouse, a user interface, a display, a touch screen display, lights (e.g., warning lights), indicators, speakers, and/or other input/output mechanisms. The input/output circuitry 608 may comprise one or more interfaces to which supporting devices may be connected. In various embodiments, aspects of the input/output circuitry 608 may be implemented on a device used by the operator to communicate with the processor 602. The input/output circuitry 608 may communicate with memory, the communication circuitry 606, and/or any other component, for example, through a bus 612.

The NFC reader circuitry 610 may be an example of an NFC reader IC by and described with reference to at least FIGs. 1A, 1B, 2, 3, 4, and 5. For example, the NFC reader IC may include antenna circuitry 614, which may be an example of antenna circuitry illustrated by and described with reference to FIGs. 2 and 3. The NFC reader circuitry 610 may be configured to enable a first single-ended antenna of the device 600 and disabling a second single-ended antenna of the device 600. For example, the NFC reader circuitry 610 may be configured to enable the first single-ended antenna by causing connection of the first single-ended antenna to a first ground terminal and may be configured to disable the second single-ended antenna by causing disconnection of the second single-ended antenna from a second ground terminal. The NFC reader circuitry 610 may be configured to obtain a first signal via the first single-ended antenna based on enabling the first single-ended antenna and disabling the second single-ended antenna. The first signal may be indicative of at least a first identifier associated with a first NFC device. After obtaining the first signal, the NFC reader circuitry 610 may be configured to enable the second single-ended antenna and disable the first single-ended antenna. For example, the NFC reader circuitry 610 may be configured to enable the second single-ended antenna by causing connection of the second single-ended antenna to the second ground terminal and may be configured to disable the first single-ended antenna by causing disconnection of the first single-ended antenna from the first ground terminal. The NFC reader circuitry 610 may be configured to obtain a second signal via the second single-ended antenna based on enabling the second single-ended antenna and disabling the first single-ended antenna. The second signal is indicative of at least a second identifier associated with a second NFC device. The NFC reader circuitry 610 may be configured to determine a respective location of the first NFC device and the second NFC device based on the first signal being indicative of the first identifier and the second signal being indicative of the second identifier.

The device 600 may be implement in hardware, software, or a combination of hardware and software. In various embodiments, the device 600 may be embodied in an integrated circuit, a microcontroller unit (MCU) (e.g., virtual machine running in an MCU), and/or the like. It should be readily appreciated that the embodiments of the systems, apparatuses, and methods described herein may be configured in various additional and alternative manners in addition to those expressly described herein.

It should be readily appreciated that the embodiments of the systems and apparatuses, described herein may be configured in various additional and alternative manners in addition to those expressly described herein.

### Conclusion

Operations and/or functions of the present disclosure have been described herein, such as in flowcharts. As will be appreciated, computer program instructions may be loaded onto a computer or other programmable apparatus (e.g., hardware) to produce a machine, such that the resulting computer or other programmable apparatus implements the operations and/or functions described in the flowchart blocks herein. These computer program instructions may also be stored in a computer-readable memory that may direct a computer, processor, or other programmable apparatus to operate and/or function in a particular manner, such that the instructions stored in the computer-readable memory produce an article of manufacture, the execution of which implements the operations and/or functions described in the flowchart blocks. The computer program instructions may also be loaded onto a computer, processor, or other programmable apparatus to cause a series of operations to be performed on the computer, processor, or other programmable apparatus to produce a computer-implemented process such that the instructions executed on the computer, processor, or other programmable apparatus provide operations for implementing the functions and/or operations specified in the flowchart blocks. The flowchart blocks support combinations of means for performing the specified operations and/or functions and combinations of operations and/or functions for performing the specified operations and/or functions. It will be understood that one or more blocks of the flowcharts, and combinations of blocks in the flowcharts, can be implemented by special purpose hardware-based computer systems which perform the specified operations and/or functions, or combinations of special purpose hardware with computer instructions.

While this specification contains many specific embodiments and implementation details, these should not be construed as limitations on the scope of any disclosures or of what may be claimed, but rather as descriptions of features specific to particular embodiments of particular disclosures. Certain features that are described herein in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

While operations and/or functions are illustrated in the drawings in a particular order, this should not be understood as requiring that such operations and/or functions be performed in the particular order shown or in sequential order, or that all illustrated operations be performed, to achieve desirable results. In certain circumstances, operations and/or functions in alternative ordering may be advantageous. In some cases, the actions recited in the claims may be performed in a different order and still achieve desirable results. Thus, while particular embodiments of the subject matter have been described, other embodiments are within the scope of the following claims.

While this detailed description has set forth some embodiments of the present invention, the appended claims cover other embodiments of the present invention which differ from the described embodiments according to various modifications and improvements.

## Claims

1. A method comprising:
enabling a first single-ended antenna of a near-field communication (NFC) reader and disabling a second single-ended antenna of the NFC reader, wherein enabling the first single-ended antenna includes connecting the first single-ended antenna to a first ground terminal, and wherein disabling the second single-ended antenna includes disconnecting the second single-ended antenna from a second ground terminal;
obtaining a first signal via the first single-ended antenna based at least in part on enabling the first single-ended antenna and disabling the second single-ended antenna, wherein the first signal is indicative of at least a first identifier associated with a first NFC device;
after obtaining the first signal, enabling the second single-ended antenna and disabling the first single-ended antenna, wherein enabling the second single-ended antenna includes connecting the second single-ended antenna to the second ground terminal, and wherein disabling the first single-ended antenna includes disconnecting the first single-ended antenna from the first ground terminal;
obtaining a second signal via the second single-ended antenna based at least in part on enabling the second single-ended antenna and disabling the first single-ended antenna, wherein the second signal is indicative of at least a second identifier associated with a second NFC device; and
determining a respective location of the first NFC device and the second NFC device based at least in part on the first signal being indicative of the first identifier and the second signal being indicative of the second identifier.

2. The method according to claim 1, wherein enabling the first single-ended antenna and disabling the second single-ended antenna comprises:
operating a first switch associated with the first single-ended antenna in accordance with an on state to connect the first single-ended antenna to the first ground terminal; and
operating a second switch associated with the second single-ended antenna in accordance with an off state to disconnect the second single-ended antenna from the second ground terminal.

3. A computer program product comprising at least one non-transitory computer-readable storage medium having computer program code stored thereon that, in execution with at least one processor, is configured for:
enabling a first single-ended antenna of a near-field communication (NFC) reader and disabling a second single-ended antenna of the NFC reader, wherein enabling the first single-ended antenna includes connecting the first single-ended antenna to a first ground terminal, and wherein disabling the second single-ended antenna includes disconnecting the second single-ended antenna from a second ground terminal;
obtaining a first signal via the first single-ended antenna based at least in part on enabling the first single-ended antenna and disabling the second single-ended antenna, wherein the first signal is indicative of at least a first identifier associated with a first NFC device;
after obtaining the first signal, enabling the second single-ended antenna and disabling the first single-ended antenna, wherein enabling the second single-ended antenna includes connecting the second single-ended antenna to the second ground terminal, and wherein disabling the first single-ended antenna includes disconnecting the first single-ended antenna from the first ground terminal;
obtaining a second signal via the second single-ended antenna based at least in part on enabling the second single-ended antenna and disabling the first single-ended antenna, wherein the second signal is indicative of at least a second identifier associated with a second NFC device; and
determining a respective location of the first NFC device and the second NFC device based at least in part on the first signal being indicative of the first identifier and the second signal being indicative of the second identifier.

4. An apparatus comprising:
at least one processor; and
at least one memory having computer program code stored thereon that, in execution with the at least one processor, causes the apparatus at least to:
enable a first single-ended antenna of a near-field communication (NFC) reader and disable a second single-ended antenna of the NFC reader, wherein enabling the first single-ended antenna includes connecting the first single-ended antenna to a first ground terminal, and wherein disabling the second single-ended antenna includes disconnecting the second single-ended antenna from a second ground terminal;
obtain a first signal via the first single-ended antenna based at least in part on enabling the first single-ended antenna and disabling the second single-ended antenna, wherein the first signal is indicative of at least a first identifier associated with a first NFC device;
after obtaining the first signal, enable the second single-ended antenna and disable the first single-ended antenna, wherein enabling the second single-ended antenna includes connecting the second single-ended antenna to the second ground terminal, and wherein disabling the first single-ended antenna includes disconnecting the first single-ended antenna from the first ground terminal;
obtain a second signal via the second single-ended antenna based at least in part on enabling the second single-ended antenna and disabling the first single-ended antenna, wherein the second signal is indicative of at least a second identifier associated with a second NFC device; and
determine a respective location of the first NFC device and the second NFC device based at least in part on the first signal being indicative of the first identifier and the second signal being indicative of the second identifier.

5. The computer program product according to claim **3,** or the apparatus according to claim **4,** wherein, to enable the first single-ended antenna and disable the second single-ended antenna, the computer program code, in execution with the at least one processor, is further configured for:
operating a first switch associated with the first single-ended antenna in accordance with an on state to connect the first single-ended antenna to the first ground terminal; and
operating a second switch associated with the second single-ended antenna in accordance with an off state to disconnect the second single-ended antenna from the second ground terminal.

6. The method according to claim 2, or the computer program product or the apparatus according to claim **5,** wherein the first switch and the second switch comprise metal-oxide-semiconductor field-effect transistors external to the NFC reader.

7. The method, or the computer program product, or the apparatus, according to claim **6,** wherein:
operating the first switch in accordance with the on state includes setting a first antenna tuning voltage associated with the first switch to a first value, and
operating the second switch in accordance with the off state includes setting a second antenna tuning voltage associated with the second switch to a second value.

8. The method according to claim 2, or the computer program product or the apparatus according to claim **5,** wherein the first switch and the second switch comprise metal-oxide-semiconductor field-effect transistors internal to the NFC reader.

9. The method, or the computer program product, or the apparatus, according to claim 8, wherein:
operating the first switch in accordance with the on state includes setting a first antenna calibration parameter associated with the first switch to a first value, and
operating the second switch in accordance with the off state includes setting a second antenna calibration parameter associated with the second switch to a second value.

10. The method according to any of claims 1, 2, 6 to 9, wherein the first signal and the second signal are further indicative of a third identifier associated with a third NFC device, and wherein the method further comprises:
determining a location of the third NFC device based at least in part on the first signal and the second signal being indicative of the third identifier.

11. The computer program product according to claim 3, 5 to 9, or the apparatus according to claim 4 to 9, wherein the first signal and the second signal are further indicative of a third identifier associated with a third NFC device, and wherein the computer program code, in execution with the at least one processor, causes the apparatus to:
determine a location of the third NFC device based at least in part on the first signal and the second signal being indicative of the third identifier.

12. The method according to claim 10, or the computer program product or the apparatus according to claim 11, wherein determining the location of the third NFC device is based at least in part on at least a first portion of the first single-ended antenna overlapping with at least a second portion of the second single-ended antenna.

13. The method according to any of claims 1, 2, 6 to 10, 12, or the computer program product according to any of claims 3, 5 to 9, 11, 12, or the apparatus according to any of claims 4 to 9, 11, 12, wherein the first single-ended antenna is non-overlapping with the second single-ended antenna.
